# EUROPEAN PATENT APPLICATION

(11) **EP 1 523 197 A2**
(43) Date of publication of application: **13.04.2005**
(21) Application number: 04077720.3
(22) Date of filing: 05.10.2004
(51) Int. Cl.: H04N 9/28

(54) **Apparatus and method for adjusting convergence of protection television**

(30) Priority: 06.10.2003 KR 2003069121
(71) Applicant: LG Electronics Inc., Seoul (KR)
(72) Inventor: Woo Shin, Kyung, Ineui-dong Gumi-si Gyeongsangbuk-do (KR); Lee, Mi Young, Buk-gu Daegu-si (KR)
(74) Representative: Ekström, Nils

(57) **Abstract**

Provided are apparatus and method for adjusting a convergence of a projection television. In adjusting the convergence of the projection television, a static convergence and a dynamic convergence are sequentially performed on the same adjustment screen, thereby performing an effective convergence adjustment.

## Description

### BACKGROUND OF THE INVENTION

### Field of the Invention

The present invention relates to an image display device, and more particularly, to an apparatus and method for adjusting a convergence of a projection television.

### Description of the Related Art

Generally, CRT-type projection television (TV) displays an image on a large screen by using three CRTs (R, G, B) basically.

In order to optimize a display picture quality of the projection TV, it is important to match three colors of red (R), green (G) and blue (B) in synchronization with three CRTs.

A sensitivity of the projection TV consists of a variety of items, such as a white uniformity (W/U), a bright uniformity (B/U), a convergence, a focus, a distortion, and so on.

Here, the convergence means that R, G and B beams emitted from an electron gun is focused on one point of a screen by a magnetic field of a deflection yoke. If the beams are not well deflected due to a malfunction of the deflection yoke or an influence of the magnetic field, a mis-convergence occurs so that colors are out of alignment on the screen.

When the R, G and B beams are correctly focused on one point, a white color appears. However, when the mis-convergence occurs, a line taking on an abnormal other color of R and/or G and/or B appears so that it acts as a factor of degrading a picture quality.

That is, lights emitted from the CRTs of R, G and B must be focused on one point so as to display a white color. Here, the focusing of the R, G and B on one point is called a convergence.

Accordingly, a method for automatically adjusting the convergence has been used.

A related art projection TV will now be described with reference to the accompanying drawings.

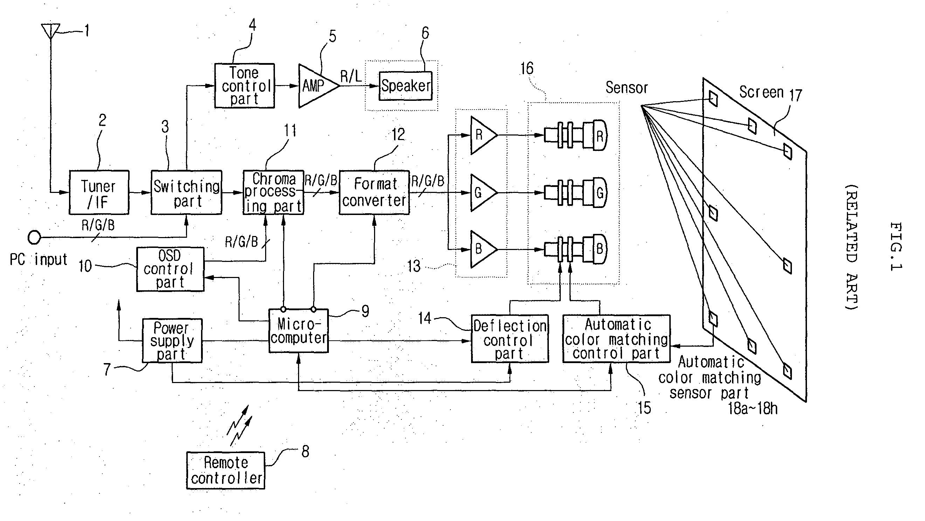

Fig. 1 is a block diagram of a related art projection TV.

Referring to Fig. 1, in the related art projection TV, a tuner/IF 2 selects a predetermined frequency band from a broadcasting signal inputted through an antenna 1 and demodulates an intermediate frequency component among the broadcasting signal. A switching part 3 selects an output of the tuner/IF 2 or a video signal inputted from an external device. A tone control part 4 receives an audio signal from the broadcasting signal outputted through the switching part 3 and controls a tone of the audio signal. An amp 5 amplifies an output of the tone control part 4 and outputs the amplified signal through a speaker 6. A chroma processing part 11 performs a chroma process so that video signals, such as characters or icon signals, outputted from the switching part 3 can be displayed. A power supply part 7 supplies a power to internal parts of the system. A microcomputer 9 is supplied with the power from the power supply part 7 and outputs a control signal corresponding to a user command inputted from a remote controller 8. A format converter 12 converts the video signal, which is processed by the chroma processing part 11 according to the control signal of the microcomputer 9, into a displayable format. A video amplifying part 13 amplifies an output of the format converter 12. A deflection part 16 deflects the video signal amplified by the video amplifying part 13. The deflected video signal is displayed on a screen 17. A defection control part 14 controls the deflection part 14 to perform the deflection according to the control signal of the microcomputer 9. An automatic color matching control part 15 compares a predefined reference value with a value sensed by automatic color matching sensor part 18a to 18h, which are installed in predetermined regions of the screen 17.

An operation of the related art projection TV will now be described.

First, when a user inputs an operation command through the remote controller 8, the power supply part 7 supplies the power to the microcomputer 9 and the respective parts. The microcomputer 9 outputs the control signal to the tuner/IF 2 so that the user can select a desired channel.

Also, the switching part 3 selects one of the vide signals outputted from the tuner/IF 2 and external devices (for example, PC) according to the control signal outputted from the microcomputer 9. The tone control part 4 receives the audio signal from the switching part 3 and outputs it through the speaker 6.

The video signal selected through the switching part 3 is inputted to the chroma processing part 11. The chroma processing part 11 processes the video signal according to the control signal of the microcomputer 9, so that the video signal such as character or ion can be displayed. The video signal processed by at the chroma processing part 11 is inputted to the format converter 12. Then, the format converter 12 controls the format so that a predetermined output can be generated.

Thereafter, the signal converted at the format converter 12 is amplified by the video amplifying part 13. The amplified video signal is deflected through the deflection part 16 according to the control signal of the deflection control part 14 and then displayed on the screen 17.

The automatic color matching control part 15 receives the values sensed by the automatic color matching sensor part 18a to 18h, which are installed in the predetermined regions of the screen 17, and outputs the control signal to the deflection part 16 so that a compensation can be achieved as much as the difference between the sensed value and the predefined reference value. In this manner, the convergence can be automatically adjusted.

Meanwhile, in case video signals are inputted from external devices such as PC, in addition to the video signal from the antenna 1, if the video signal from the PC is presented, most of the inputted video signals are still images. Therefore, if the image is continuously displayed for more than a predetermined time, PRT (which is a CRT used in the projection) constituting the deflection part 16 and the screen 17 are degraded. Thus, a function similar to a screen saver function is performed.

That is, the microcomputer 9 checks a motion detection registry of the format converter 12. If the there is no motion of the video signal for more than a predetermined time, the screen saver function is performed to move the letters on the screen at random.

Since the related art projection TV displays the image on the screen after the electron beams from the R, G and B electron guns are reflected by the mirror, the incident angles of the electron beams with respect to the screen are different from one another, resulting in the mis-convergence.

This mis-convergence has a decisive influence on the picture quality. Accordingly, the picture quality is determined by how appropriately the convergence of the projection TV is adjusted.

Also, for the purpose of the convergence adjustment, the related art projection TV allows only a static adjustment with respect to 1 point or only a dynamic adjustment with respect to 9 point so as to adjust the convergence.

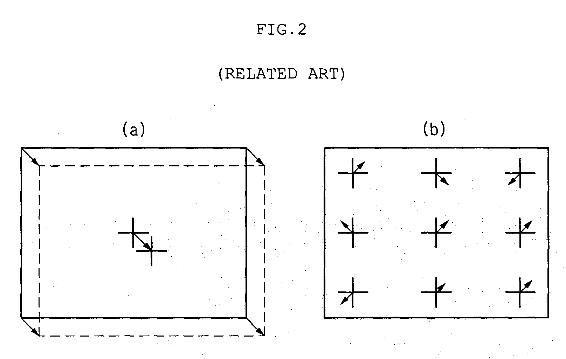

Referring to Fig. 2, the 1-point convergence adjustment changes a static value. That is, this method is to simply move all points of the screen in the same direction. Therefore, there is a problem in that a minute distortion of a predetermined period cannot be solved.

Further, as shown in Fig. 2, in the case of the 9-point convergence adjustment, the user must adjust the convergence with respect to nine points, so that it is inconvenient for the user.

### SUMMARY OF THE INVENTION

Accordingly, the present invention is directed to apparatus and method for adjusting a convergence of a projection television that substantially obviates one or more problems due to limitations and disadvantages of the related art.

An object of the present invention is to provide apparatus and method for adjusting a convergence of a projection television in which as a user inputs a convergence adjustment command, a static convergence adjustment and a dynamic convergence adjustment are incorporated and performed.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, there is provided an apparatus for adjusting convergence of a projection television, the apparatus including: a storing part for storing a reference adjustment data for a convergence adjustment; display means for displaying an adjustment screen for the convergence adjustment; a microcomputer for performing a static convergence adjustment and a dynamic convergence adjustment according to a user's convergence adjustment command; and a convergence adjustment part for loading the reference adjustment data stored in the storing part and a previous user adjustment data according to a control signal of the microcomputer and computing a user adjustment data from an adjustment value adjusted by a user to perform the convergence adjustment.

According to another aspect of the present invention, there is provided an apparatus for adjusting convergence of a projection television, the apparatus including: storing means for storing a reference adjustment data for a convergence adjustment and a user adjustment data adjusted by a user; display means for displaying an adjustment screen for the convergence adjustment; a convergence adjustment part for computing a new user adjustment data from the a convergence adjustment value adjusted by the user through the adjustment screen; and a microcomputer for controlling to display the adjustment screen and storing the new user adjustment data computed by the convergence adjustment part.

According to another aspect of the present invention, there is provided a method for adjusting a convergence of a projection television, the method including: displaying a screen for a convergence adjustment according to a user's convergence adjustment command; sequentially performing a static convergence adjustment and a dynamic convergence adjustment on the screen for the convergence adjustment; and after the convergence adjustment is completed, displaying a corrected screen.

According to another aspect of the present invention, there is provided a method for adjusting a convergence of a projection television, the method including: inputting a user's convergence adjustment command; sequentially performing a static convergence adjustment and a dynamic convergence adjustment while a cursor is sequentially positioned on an adjustment point; and storing a newly created adjustment data.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

Fig. 1 is a block diagram of a general projection television according to the related art;

Fig. 2 illustrates a convergence adjustment screen of a projection television according to the related art;

Fig. 3 is a block diagram of an apparatus for adjusting a convergence of a projection television according to an embodiment of the present invention;

Fig. 4 illustrates a convergence adjustment screen of a projection television according to the present invention; and

Fig. 5 is a flowchart illustrating a method for adjusting a convergence of a projection television according to another embodiment of the present invention.

### DETAILED DESCRIPTION OF THE INVENTION

Reference will now be made in detail to the preferred embodiments of the present invention, examples of which are illustrated in the accompanying drawings.

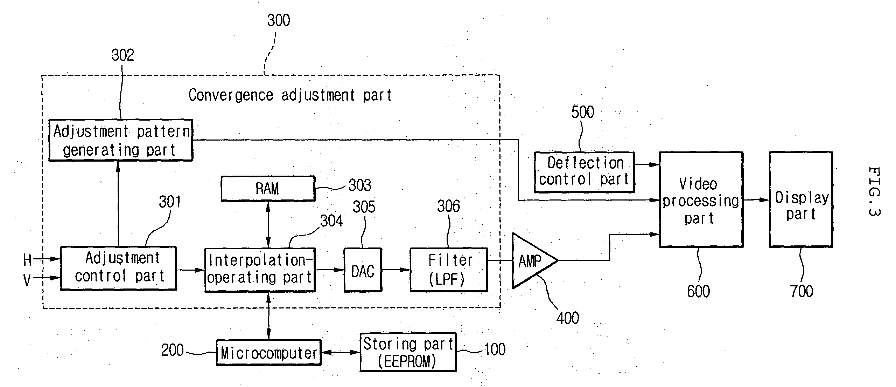

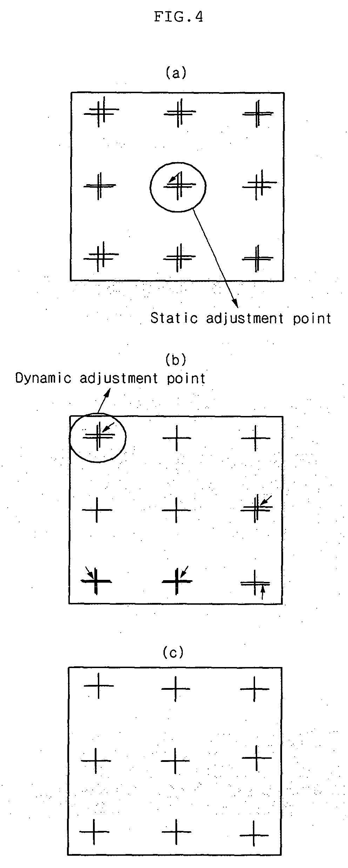

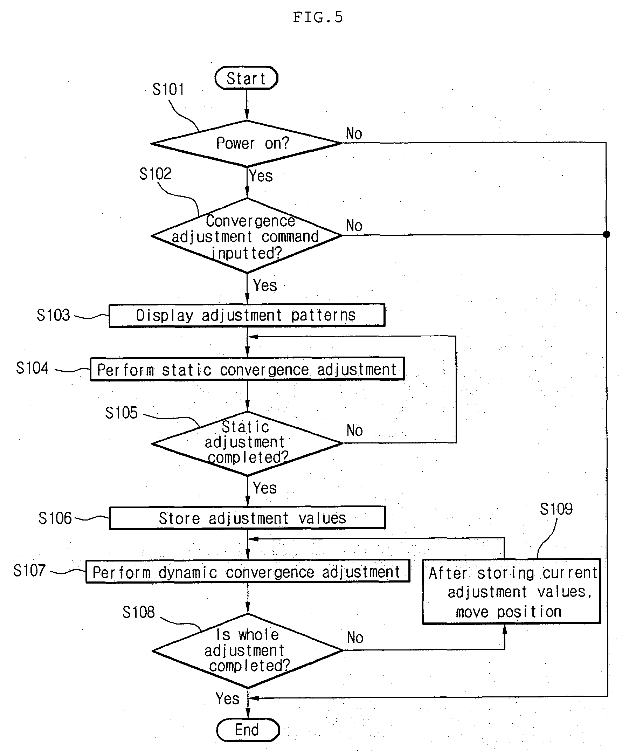

Fig. 3 is a block diagram of an apparatus for adjusting a convergence of a projection television according to an embodiment of the present invention, Fig. 4 illustrates a convergence adjustment screen of a projection television according to the present invention, and Fig. 5 is a flowchart illustrating a method for adjusting a convergence of a projection television according to another embodiment of the present invention.

Referring to Fig. 3, the apparatus for adjusting a convergence of a projection television includes: a storing part 100 storing a 'reference adjustment data' for a convergence adjustment; a display part 700 displaying an adjustment screen for the convergence adjustment; a microcomputer 200 for sequentially performing a static convergence adjustment and a dynamic convergence adjustment from the convergence adjustment screen displayed on the display part 700 as a user inputs a convergence adjustment command; a convergence adjustment part 300 which loads the 'reference adjustment data' in advance stored in the storing part 100 and a 'user adjustment data' stored in a RAM 303 according to a control signal of the microcomputer 200, reflecting a 'new user adjustment data' adjusted by the user and performing a correction; and a video processing part 600 processing an adjustment value adjusted by the convergence adjustment part 300 and a video signal inputted by a deflection control of a deflection control part 500 into a signal that can be displayed on a screen.

The convergence adjustment part 300 includes: the RAM 303 storing the user adjustment data according to a user adjustment state before power is turned off, and reflecting an adjustment data adjusted by the user in an adjustment mode to store a new user adjustment data; an adjustment control part 301 receiving a horizontal/vertical synchronous signal inputted according to a control signal of the microcomputer 200 to control generation of an adjustment pattern, a cursor and the like; an adjustment pattern generating part 302 generating the adjustment pattern according to a control signal of the adjustment control part 301; an interpolation-operating part 304 for receiving an adjustment point selected by the user from the adjustment pattern, the reference adjustment data stored in the storing part, and the user adjustment data stored in the RAM 303, performing an interpolation operation of the adjustment point, the reference adjustment data and the user adjustment data, and computing a new user adjustment data; a D/A converter (DAC) 305 converting data interpolated by the interpolation-operating part 304 into an analog data; and a filter 306 filtering the data converted by the D/A converter 305 and outputting a filtered data. Herein, the storing part 100 is an EEPROM.

In more detail, the 'reference adjustment data' stored in the storing part 100 is an adjustment value set in the shipping of the projection television, and is, for example, a basic value when the convergence adjustment value of the projection television is initialized. The 'reference adjustment data' includes the dynamic convergence adjustment data.

The 'user adjustment data' stored in the RAM 303 is an adjustment data before power is turned off. For example, in case where a user adjusts the convergence, a value changed from the 'reference adjustment data' is stored. In other words, a sum of the 'reference adjustment data' and the 'user adjustment data' becomes a current convergence adjustment data.

The 'user adjustment data' includes a dynamic convergence adjustment value and a static convergence adjustment data.

Alternatively, in case where the user completes the convergence adjustment in a state where the 'reference adjustment data' and the 'user adjustment data' are loaded together, the changed adjustment data is again stored in the RAM 303 as a new 'user adjustment data' as much as a difference from the 'reference adjustment data'.

The new 'user adjustment data' is stored as a dynamic convergence adjustment data and a static convergence adjustment data.

Accordingly, if the 'reference adjustment data' and the newly stored 'user adjustment data' are summed, a current convergence adjustment data is obtained.

Here, the static convergence adjustment data represents a value that an entire screen is moved in a constant direction and a predetermined size, and the dynamic convergence adjustment data represents a value that a part of the screen is moved in an arbitrary direction and a predetermined size.

In other words, the static convergence adjustment data can have the same meaning as the dynamic convergence adjustment data for allowing all points of the screen to move in the same direction and size.

That is, if all points of the screen are moved in the same direction and size, the dynamic convergence adjustment is performed through the entire screen. However, as a result, the dynamic convergence adjustment has the same result as the static convergence adjustment.

Accordingly, the 'reference adjustment data' stored in the storing part 100 can be represented as the dynamic convergence adjustment data, and the 'user adjustment data' and the newly stored 'user adjustment data' can be also represented as the dynamic convergence adjustment data.

An operation of the above-constructed inventive convergence adjusting apparatus for the projection TV is described as below.

If a user inputs an adjustment command to adjust the convergence, an adjustment pattern for the convergence adjustment is displayed on the displaying part 700. At the time of displaying the adjustment pattern, an adjustment point for adjusting a static convergence and an adjustment point for adjusting a dynamic convergence are concurrently displayed.

Next, as shown in Fig. 4A, if the user moves the cursor on the adjustment point for adjusting the static convergence, the interpolation-operating part 304 loads the reference adjustment data stored in the storing part 100 and the user adjustment data stored in the RAM 303 according to a control signal of the microcomputer 200. And then, the interpolation-operating part 304 performs an interpolation operation for the static convergence adjustment data changed depending on the user's adjustment, and again stores the interpolation-operated data in the RAM 33.

The stored data becomes a new user adjustment data.

Further, if the static convergence adjustment is completed, as shown in Fig. 4B, the cursor is positioned on the adjustment point for the dynamic convergence adjustment. After that, the reference adjustment data of the corresponding adjustment point is read out from the storing part 100, and then the user adjustment data is loaded. Next, the interpolation operation for the dynamic convergence adjustment data varied depending on the user's adjustment is performed using the interpolation-operating part 304.

Therefore, it is possible to perform a fine adjustment by sequentially moving a cursor with respect to the rest eight points distributed on up, down, left, and right, respectively, in performing the dynamic convergence adjustment. If all convergence adjustments are completed, a completely adjusted screen can be obtained as illustrated in Fig. 4(c).

Referring to Fig. 5, a convergence adjustment method for a projection TV according to the present invention as described above will now be explained. First, if power is turned on, whether a user selects a convergence adjustment command is judged (S101 to S102).

Subsequently, if the convergence adjustment command is selected as a result of the judgment (S102), adjustment patterns for performing a static convergence and a dynamic convergence at the same time are displayed (S103).

If the adjustment patterns are displayed, the static convergence adjustment is first performed (S104).

Next, whether the static convergence adjustment is completed is judged (S105).

If the static convergence adjustment is completed as a result of the judgment (S105), the adjusted static convergence value is stored and then the dynamic convergence adjustment is performed (S106 to S107).

After that, whether the whole adjustment is completed is judged (S108).

If the whole adjustment is not completed as a result of the judgment (S108), the currently adjusted dynamic adjustment data is stored and then the convergence adjustment is constantly performed by sequentially moving data for the dynamic convergence adjustment according to an order set in advance (S109).

The above-described convergence adjustment apparatus and method for a projection television according to the present invention display the adjustment patterns for the static and the dynamic convergence adjustments at the same time, and sequentially perform the static and the dynamic convergence adjustments if a user inputs a convergence adjustment command.

As described above, the convergence adjustment apparatus and method for a projection television according to the present invention have the following effects.

First, if a convergence command is input, adjustment points for the static and the dynamic convergence adjustments are displayed at the same time, so that the convergence adjustment can be performed more conveniently.

Second, as the convergence adjustment is precisely performed, an image of more high quality can be displayed.

Third, as an image of more high quality is provided, user satisfaction is increased.

It will be apparent to those skilled in the art that various modifications and variations can be made in the present invention. Thus, it is intended that the present invention covers the modifications and variations of this invention provided they come within the scope of the appended claims and their equivalents.

## Claims

1. An apparatus for adjusting convergence of a projection television, comprising:
a storing part for storing a reference adjustment data for a convergence adjustment;
display means for displaying an adjustment screen for the convergence adjustment;
a microcomputer for performing a static convergence adjustment and a dynamic convergence adjustment according to a user's convergence adjustment command; and
a convergence adjustment part for loading the reference adjustment data stored in the storing part and a previous user adjustment data according to a control signal of the microcomputer and computing a user adjustment data from an adjustment value adjusted by a user to perform the convergence adjustment.

2. The apparatus according to claim 1, wherein the microcomputer controls to sequentially perform the static convergence adjustment and the dynamic convergence adjustment.

3. The apparatus according to claim 1, wherein the microcomputer controls to perform the static convergence adjustment and the dynamic convergence adjustment on the same adjustment screen.

4. The apparatus according to claim 1, wherein the convergence adjustment part comprises:
a RAM for storing the user adjustment data;
an adjustment control part for receiving a horizontal/vertical synchronous signal according to a control signal of the microcomputer to generate an adjustment pattern and a cursor;
an adjustment pattern generating part for generating the adjustment pattern according to a control signal of the adjustment control part; and
an interpolation-operating part for receiving an adjustment point selected by the user from the adjustment pattern, the reference adjustment data stored in the storing part, and the user adjustment data stored in the RAM, performing an interpolation operation of the adjustment point, the reference adjustment data and the user adjustment data, and computing a new user adjustment data.

5. The apparatus according to claim 1, wherein the reference adjustment data is a dynamic adjustment data.

6. The apparatus according to claim 1, wherein the user adjustment data is a dynamic adjustment data and a static adjustment data.

7. An apparatus for adjusting convergence of a projection television, comprising:
storing means for storing a reference adjustment data for a convergence adjustment and a user adjustment data adjusted by a user;
display means for displaying an adjustment screen for the convergence adjustment;
a convergence adjustment part for computing a new user adjustment data from the a convergence adjustment value adjusted by the user through the adjustment screen; and
a microcomputer for controlling to display the adjustment screen and storing the new user adjustment data computed by the convergence adjustment part.

8. The apparatus according to claim 7, wherein the microcomputer controls to perform the static convergence adjustment and the dynamic convergence adjustment on the same adjustment screen.

9. The apparatus according to claim 7, wherein the computing of the new user adjustment data is performed by receiving an adjustment point selected by the user from the adjustment screen, and the reference adjustment data and the user adjustment data stored in the storing means, and performing an interpolation operation of the adjustment point, the reference adjustment data and the user adjustment data.

10. A method for adjusting a convergence of a projection television, the method comprising:
displaying a screen for a convergence adjustment according to a user's convergence adjustment command;
sequentially performing a static convergence adjustment and a dynamic convergence adjustment on the screen for the convergence adjustment; and
after the convergence adjustment is completed, displaying a corrected screen.

11. The method according to claim 10, wherein the screen for the convergence adjustment comprises an adjustment point for the static convergence adjustment and an adjustment point for the dynamic convergence adjustment which are at the same time displayed.

12. The method according to claim 10, wherein the screen for the convergence adjustment is a screen to which a reference adjustment data that is an initial value set in the shipping and a user adjustment data are applied.

13. The method according to claim 10, wherein the static convergence adjustment is an alteration of the adjustment data which allows the adjustment point for the static convergence adjustment to be moved in the same direction and size with respect to all points on a screen.

14. The method according to claim 10, wherein the dynamic convergence adjustment is an alteration of the adjustment data which allows a part of the screen to be moved in a predetermined direction and size.

15. A method for adjusting a convergence of a projection television, the method comprising:
inputting a user's convergence adjustment command;
sequentially performing a static convergence adjustment and a dynamic convergence adjustment while a cursor is sequentially positioned on an adjustment point; and
storing a newly created adjustment data.

16. The method according to claim 15, wherein the stored adjustment data comprises a reference adjustment data that is an initial value and a user adjustment data set by a user.
